# EUROPEAN PATENT SPECIFICATION

(11) **EP 1 557 926 B1**
(45) Date of publication and mention of the grant of the patent: **21.12.2011**
(21) Application number: 04425029.8
(22) Date of filing: 20.01.2004
(51) Int. Cl.: H02J 7/00

(54) **Rechargeable electrical power supply unit for an electronic device of a bicycle**
Wiederaufladbares Stromversorgungseinheit für ein Fahrrad
Système rechargeable d'alimentation électrique pour une bicyclette

(43) Date of publication of application: 27.07.2005
(73) Proprietor: CAMPAGNOLO S.R.L., I-36100 Vicenza (IT)
(72) Inventor: Guderzo, Gianfranco, 36071 Arzignano (Vicenza) (IT)
(74) Representative: Riccardi, Elisa

(56) References cited:
- DE-U- 20 016 669
- US-A- 5 418 444
- US-A- 5 617 004
- US-A- 5 744 937
- US-A- 5 811 959
- US-B2- 6 534 951

## Description

The present invention refers to a rechargeable electrical power supply unit for an electronic device of a bicycle.

Electronic devices for bicycles are known, used, for example, for the management and control of an electronic gearshift or the management of a device for acquiring and displaying the functions of the bicycle, commonly known as cycle computer.

Such types of devices normally foresee a central unit for data acquiring, processing and controlling, realised with integrated electronic devices, with which a power supply unit which supplies the energy necessary for its operation is associated.

The power supply unit can consist of one or more batteries of a rechargeable type periodically subjected, when necessary, to the recharging operation through suitable battery chargers.

The desired power supply voltage for the operation of the electronic devices, for example 12 Volts, is normally obtained through a series connection of many lower voltage batteries, for example three series-connected rechargeable batteries each of 4 Volts. Such a solution therefore accomplishes a battery pack with two terminals where the desired voltage is made available.

The recharging of the battery pack is accomplished through the electrical connection of a battery charger which supplies the charging current to the aforementioned two terminals and therefore to the individual series connected batteries in the battery pack.

The described solution, nevertheless, has some drawbacks.

A first drawback consists in that the recharging of the entire battery pack does not allow adequate control of the recharging status of the individual batteries of which the pack is made up. This can cause an inhomogeneous recharging level among the individual batteries which make up the battery pack, with a consequent decrease in the lifetime of the battery pack and a worsening of the electrical characteristics of voltage and current stability, if not even a damage of the batteries during recharging.

Another drawback lies in the impossibility of accomplishing a diagnosis and a check of the recharging status of the individual batteries before or during the recharging itself. It is therefore impossible to detect important parameters, like for example the charging current of the individual batteries, or to detect possible failures due, for example, to overheating.

DE20016669 discloses a system for a bicycle in which power is provided can be supplies to lights and small loads by either a battery or dynamo. The battery can be charged by the dynamo.

The object of the present invention is to overcome said drawbacks.

A first object of the invention is to realise a rechargeable electrical power supply unit for an electronic device of a bicycle which allows a more efficient and quicker recharging with respect to known power supply units.

Another object of the invention is to create a recharging device for a rechargeable electrical power supply unit for an electronic device of a bicycle which allows the parameters of each battery to be checked during recharging.

Such objects are accomplished through a rechargeable electrical power supply unit for an electronic device of a bicycle, comprising at least two battery elements with a positive and a negative pole, characterised in that said battery elements are arranged in such a way that through switching means it is possible to realise a first operating configuration in which said battery elements are connected in series to supply energy to said electronic device and a second operating configuration in which said battery elements are connected not in series to a recharging device.

Advantageously, in the first operating configuration the power supply unit supplies the suitable voltage for the operation of the electronic device through the connection in series of the battery elements whereas in the second operating configuration, i.e. during recharging, the individual battery elements are recharged individually and in a controlled manner by the recharging device.

According to a first preferred embodiment, the power supply unit and the electronic device are fixedly connected to each other, whereas the recharging step is accomplished by connecting the recharging device to the aforementioned assembly through a connector.

According to another preferred embodiment, the power supply unit and the electronic device are disconnectable, whereby the power supply unit can advantageously be disconnected and recharged separately, whereas the electronic device may possibly be supplied through another spare power supply unit.

Further characteristics and advantages of the invention shall become clearer from the description of some preferred embodiments, given with reference to the attached drawings, wherein:
- fig. 1 represents a schematic view of the electrical power supply unit of the invention associated with an electronic device of a bicycle and a recharging device according to a first preferred embodiment;
- figures 2 to 4 represent modified embodiments of fig. 1;
- fig. 5 represents a schematic view of a battery charger device for the electrical power supply unit illustrated in figures 1 to 4;
- fig. 6 represents the block diagram of the operation of the recharging device for the power supply unit of the invention.

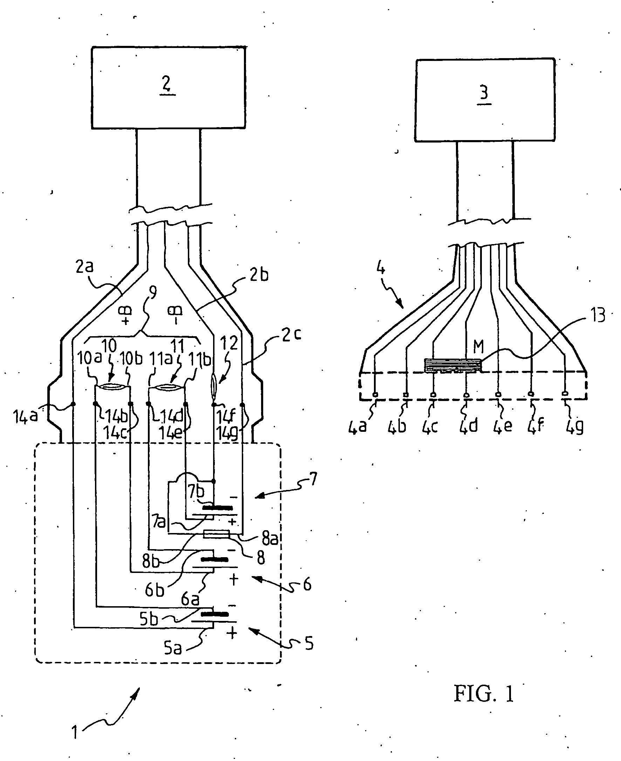

The electrical power supply unit of the invention is represented in figure 1, where it is globally indicated with 1.

The power supply unit 1 is associated with an electronic device, globally indicated with 2, and both are suitably fastened to the frame of a bicycle, not represented in the figures.

Still with reference to figure 1, a recharging device 3 is represented, better described hereafter, which has a first connector 4 provided with seven electrical contacts 4a-4g.

The power supply unit 1 comprises three battery elements 5, 6 and 7 consisting of lithium-ion rechargeable accumulators with polymeric electrolyte, of a nominal voltage of 3.7 Volts. Each accumulator element 5, 6 and 7 is provided with a respective positive terminal 5a, 6a, 7a and a negative terminal 5b, 6b, 7b. It is manifest that the battery elements 5, 6, 7 in different embodiments can consist of a different type of rechargeable accumulator, like for example Nickel-Metal Hydrate (Ni-MH) accumulators.

Between the battery elements 5, 6, 7 a temperature detector 8 is arranged, for example a PTC (Positive Temperature Coefficient) thermistor, with respective terminals 8a and 8b, wherein terminal 8b is electrically connected to terminal 7b of the battery element 7.

As can be seen in the figure, the power supply unit 1 makes up a single body with the electronic device 2, since they are mechanically and electrically fixed to each other in the manufacture step or, alternatively, in the assembly step on the bicycle.

The power supply unit 1 has switching means, globally indicated with 9, consisting of two switches 10, 11 of the normally-closed type, having respective terminals 10a, 10b and 11a, 11b.

The switch 10, when closed, creates an electrical bridge between the negative terminal 5b of battery element 5 and the positive terminal 6a of battery element 6, whereas the switch 11, when closed, creates an electrical bridge between the negative terminal 6b of battery element 6 and the positive terminal 7a of battery element 7.

With the switches 10 and 11 closed, the three battery elements 5, 6 and 7 are therefore connected in series, and between the positive terminal 5a of battery element 5 and the negative terminal 7b of battery element 7 there is a voltage equal to the sum of the voltages of the three battery elements 5, 6 and 7, i.e. 11.1 Volts in the case of lithium-ion accumulators of the type mentioned above. In this respect, it should be noted that in case the desired power supply voltage for the electronic device 2 is different, a different number of battery elements can be provided, connected in series with each other and possibly of different nominal voltages, according to the preferred combination.

The aforementioned total voltage of the series is applied to the electronic device 2 between its two power supply lines 2a and 2b.

A normally-closed switch 12 is arranged between the negative terminal 7b of battery element 7 and the power supply line 2b of electronic device 2.

A further line 2c provides to the electronic device 2 the temperature signal coming from the terminal 8a of the temperature detector 8.

Finally, the power supply unit 1 has seven electrical contacts 14a-14g electrically connected to the positive 5a, 6a, 7a and negative 5b, 6b, 7b terminals of battery elements 5, 6 and 7 and to the terminal 8a of the temperature detector 8.

The three switches 10, 11, 12 are preferably, but not necessarily, of the Reed switch type, therefore susceptible to being actuated to open by a magnet arranged close to them. In this respect, a magnetic element 13 is arranged in the first connector 4 of the recharging device 3 and, as shall be further discussed later on, shall be able to keeping the magnetic switches 10, 11, 12 open.

Operatively, when the battery elements 5, 6, and 7 are charged and the electronic device 2 carries out its functions on board of the bicycle, it is in the configuration of fig. 1 in which the switches 10, 11 and 12 are closed, the three battery elements 5, 6 and 7 are connected in series, and the electronic device 2 is supplied with the desired voltage, given by the sum of the three voltages of the battery elements 5, 6, 7.

When the charging level of the three battery elements 5, 6 and 7 falls below a predetermined threshold, it becomes necessary to carry out the recharging operation. To this purpose, the first connector 4 is connected to the power supply unit 1 through the electrical connection of its contacts 4a-4g with the corresponding contacts 14a-14g of the power supply unit 1. The connection of the first connector 4 causes the magnetic element 13 to approach the switches 10, 11 and 12 and makes them open. In such a configuration, the battery elements 5, 6 and 7 are electrically insulated from the electronic device 2 and are disconnected from each other (or in a configuration not in series), and each individual battery element is connected to a respective recharging source of the recharging device 3. This allows, as shall be better seen hereafter, optimal management of the recharging step of the battery elements 5, 6 and 7.

At completion of the charging, the first connector 4 is disconnected and the magnetic element 13 is therefore moved away from the magnetic switches 10, 11, 12. They go back into closed position and the electronic device 2 is once again supplied by the voltage resulting from the series of three battery elements 5, 6, and 7.

From what has been stated it is clear that the Reed switches can be replaced with other equivalent magnetic or electromagnetic devices, such as other types of mobile equipment relay or Hall sensor relay, or else switches controlled through another type of signal, such as an optical or radio frequency signal, or other types of sensors or proximity devices suitable for causing the switching of a remotely arranged switch.

Indeed, the magnetic switches arranged on the power supply unit 1 and the magnetic element 13 arranged on the first connector 4 create a proximity switching device which is actuated to switch when the recharging device 3 is connected to the power supply unit 1, namely when the first connector 4 is connected to the power supply unit 1. Such a device can be embodied in a functionally equivalent way in many different forms.

As an example (and without in any way wanting to exhaust the range of possibilities) the following solutions can be mentioned:
- mechanical proximity switches,
- solid state proximity switches, such as photoemitter-photodetector pairs or else photodetectors susceptible to being exposed or blocked according to whether the first connector 4 is connected to the power supply unit 1 or not,
- electromagnetic field or ultrasound proximity sensors.

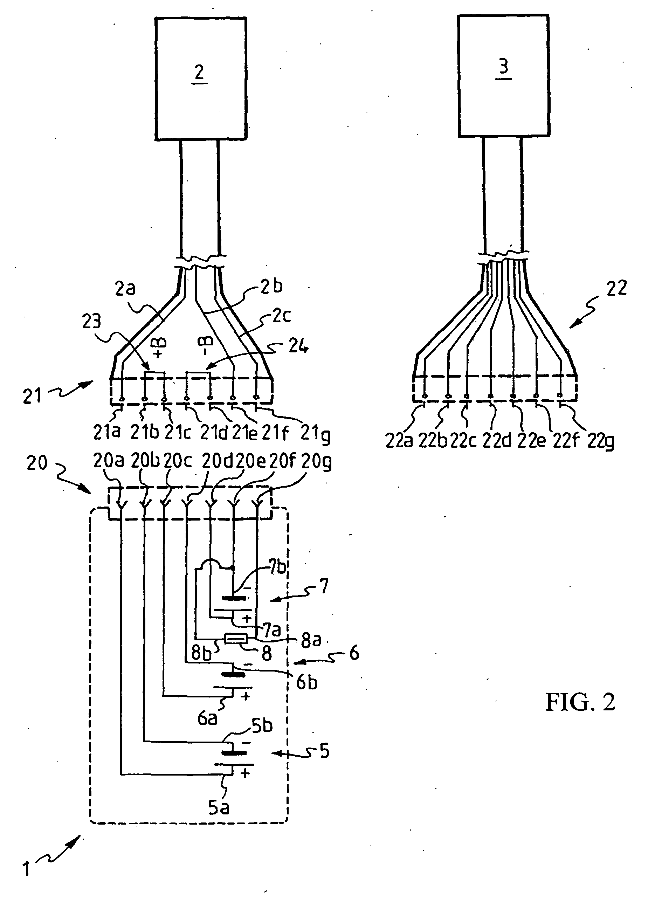

The modified embodiments represented in figures 2 to 4 differ from the preferred solution described with reference to figure 1, mainly in that the power supply unit 1 and the electronic device 2 are connected to each other in a disconnectable manner. In a first solution, the electronic device 2 is fastened to the bicycle, whereas the power supply unit 1, when it has to be subjected to the recharging operation, can be disconnected from the electronic device 2 and be arranged in a remote position more convenient for recharging.

With reference to the variant of fig. 2, the power supply unit 1 terminates with a second connector 20, and the electronic device 2 terminates with a third connector 21, the second and the third connector 20, 21 being able to be connected disconnected to/from each other.

The recharging device 3 has a first connector 22 which can be connected to the second connector 20, and thus of a similar type to the third connector 21. Preferably, the second connector 20 consists of a female multipolar socket, whereas the first and third connector 22, 21 consist of male plugs. It is clear, however, that such connectors can be of a different type and possibly inverted as far as the male-female configuration is concerned.

Again with reference to the solution of fig. 2, the terminals 5a, 5b, 6a, 6b, 7a, 7b of the battery elements 5, 6 and 7 are brought to the second connector 20 and terminate in the respective electrical contacts 20a-20f in open configuration. The electrical contact 20g is connected to the terminal 8a of the temperature detector 8.

The third connector 21 has seven electrical contacts 21a-21g able to be connected to the corresponding electrical contacts 20a-20g of the second connector 20.

Between the second electrical contact 21b and the third electrical contact 21c of the third connector 21 a first electrical bridge 23 is created, whereas between the fourth electrical contact 21d and the fifth electrical contact 21e a second electrical bridge 24 is created. The two bridges 23 and 24 are fixed and physically consist, for example, of two copper tracks formed in a printed circuit or simply through a piece of electrical cable welded between the two respective electrical contacts 21b and 21c, 21d and 21e.

There are also two power supply lines 2a, 2b connected to the electrical contacts 21a and 21f of the third connector 21 and a third line 2c for the temperature control signal connected to the electrical contact 21g, such lines being connected to the electronic device 2.

Finally, the first connector 22 of the recharging device 3 has seven accessible electrical contacts 22a-22g able to be connected to the corresponding accessible electrical contacts 20a-20g of the second connector 20.

Operatively, when the battery elements 5, 6, and 7 are charged, the second connector 20 is connected to the third connector 21, and the electronic device 2 is supplied between the two power supply lines 2a and 2b by the sum voltage of the three voltages of the battery elements 5, 6 and 7, thus carrying out its functions on board of the bicycle. In such a configuration, indeed, the first bridge 23 electrically connects the negative terminal 5b of battery element 5 and the positive terminal 6a of battery element 6, whereas the second bridge 24 electrically connects the negative terminal 6b of battery element 6 and the positive terminal 7a of battery element 7, connecting the three battery elements 5, 6 and 7 in series. Between the positive terminal 5a of battery element 5 and the negative terminal 7b of battery element 7 there is the desired voltage, equal to the sum of the voltages of the three battery elements 5, 6 and 7.

When the charge level of the three battery elements 5, 6 and 7 falls below a predetermined threshold, it becomes necessary to carry out the recharging operation. To this purpose, the second connector 20 is disconnected from the third connector 21 and is connected to the first connector 22 of the recharging device 3. In such a configuration, like in the previous case, the battery elements 5, 6 and 7 are disconnected from each other (or in the configuration not in series) and every single battery element is connected to a respective recharging source of the recharging device 3.

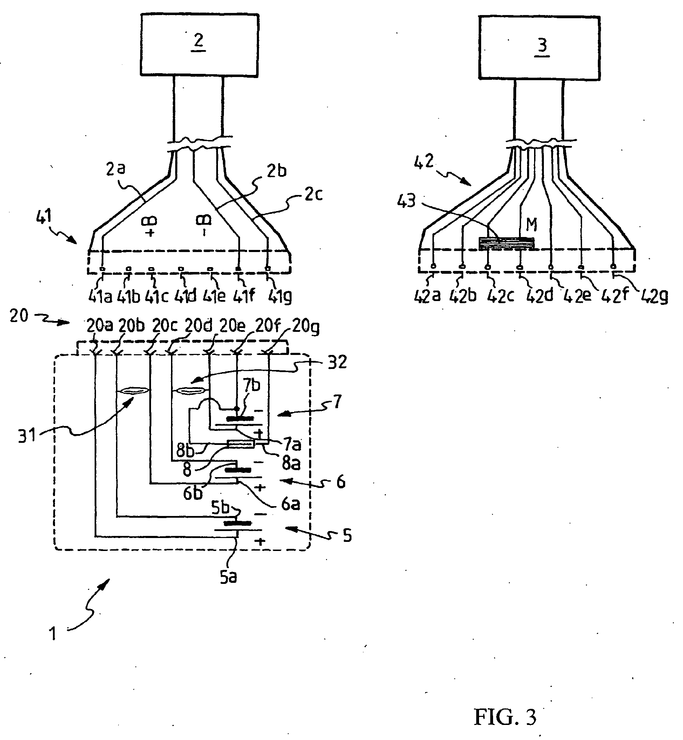

Figure 3 represents a variant of fig. 2.

The power supply unit 1 differs from the power supply unit of fig. 2 in that it has two normally-closed magnetic switches 31, 32 arranged in the proximity of the second connector 20. In a modified embodiment such switches 31, 32 could also be arranged in the second connector 20 itself.

The first switch 31, when closed, creates an electrical bridge between the negative terminal 5b of battery element 5 and the positive terminal 6a of battery element 6, whereas the second switch 32, when closed, creates an electrical bridge between the negative terminal 6b of battery element 6 and the positive terminal 7a of battery element 7.

With the switches 31 and 32 closed, the three battery elements 5, 6 and 7 are therefore connected in series and between the positive terminal 5a of battery element 5 and the negative terminal 7b of battery element 7 there is a voltage equal to the sum of the voltages of the three battery elements 5, 6 and 7.

The third connector 41 of the electronic device 2 has seven electrical contacts 41a-41g, wherein the first 41a and the sixth 41f contact are connected to the respective supply lines 2a, 2b of the electronic device 2 and the electrical contact 41g is connected to the line 2c for the temperature control signal. The remaining electrical contacts 41b-41e, on the other hand, are free of electrical connections.

The first connector 42 of the recharging device 3 has seven accessible electrical contacts 42a-42g and also has a magnetic element 43 which keeps the magnetic switches 31, 32 open when it is arranged in their proximity.

Operatively, when the battery elements 5, 6, and 7 are charged, the second connector 20 is connected to the third connector 41 and the electronic device 2 is supplied between the two power supply lines 2a and 2b by the sum voltage of the three voltages of the battery elements 5, 6 and 7, thus carrying out its functions on board of the bicycle. In such a configuration, indeed, the first switch 31 is closed and creates the electrical bridge between the negative terminal 5b of battery element 5 and the positive terminal 6a of battery element 6, whereas the second switch 32, also closed, creates the electrical bridge between the negative terminal 6b of battery element 6 and the positive terminal 7a of battery element 7, connecting the three battery elements 5, 6 and 7 in series. Between the positive terminal 5a of battery element 5 and the negative terminal 7b of battery element 7 there is the desired voltage, equal to the sum of the voltages of the three battery elements 5, 6 and 7.

When the charge level of the three battery elements 5, 6 and 7 falls below a predetermined threshold, it becomes necessary to carry out the recharging operation. To this purpose, the second connector 20 is disconnected from the third connector 41 and is connected to the first connector 42 through the electrical connection of the contacts 42a-42g with the corresponding contacts 20a-20g of the second connector 20. The connection of the first connector 42 causes the magnetic element 43 to approach the switches 31 and 32 and makes them open. In such a configuration, the battery elements 5, 6 and 7 are disconnected from each other (or in the configuration not in series) and every single battery element is connected to a respective recharging source of the recharging device 3.

Upon completion of the charging, the first connector 42 can be disconnected and the magnetic element 43 therefore moved away from the magnetic switches 31, 32. They go back into the closed position, and the power supply unit 1 can once again be connected to the electronic device 2.

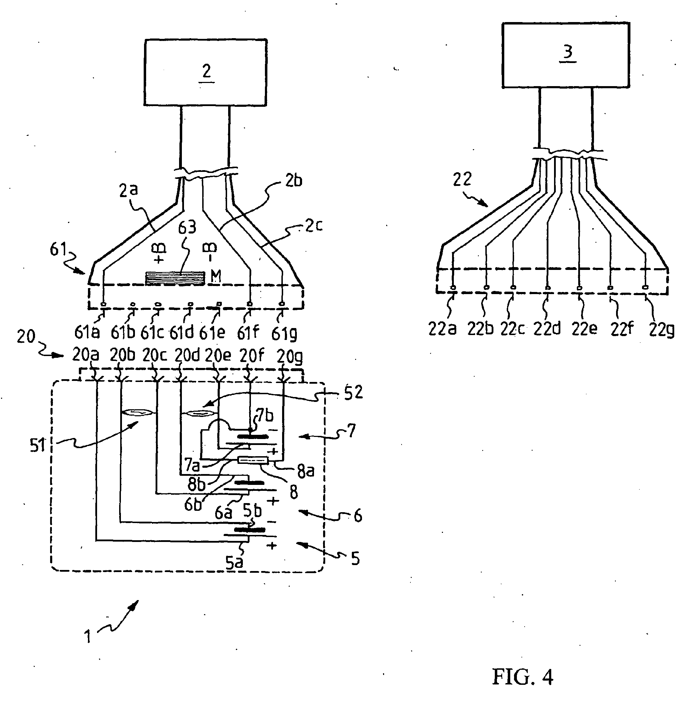

Figure 4 represents another variant of fig. 2.

The power supply unit 1 differs from the power supply unit of fig. 2 in that it has two normally-open magnetic switches 51, 52 arranged in the proximity of the second connector 20. In a modified embodiment such switches 51, 52 could also be arranged in the second connector 20 itself.

The first switch 51, when closed, creates an electrical bridge between the negative terminal 5b of battery element 5 and the positive terminal 6a of battery element 6, whereas the second switch 52, when closed, creates an electrical bridge between the negative terminal 6b of battery element 6 and the positive terminal 7a of battery element 7.

With the switches 51 and 52 closed, the three battery elements 5, 6 and 7 are therefore connected in series, and between the positive terminal 5a of battery element 5 and the negative terminal 7b of battery element 7 there is a voltage equal to the sum of the voltages of the three battery elements 5, 6 and 7.

The third connector 61 of the electronic device 2 has seven electrical contacts 61a-61g, wherein the first 61a and the sixth 61f contacts are connected to the respective power supply lines 2a, 2b of the electronic device 2 and the electrical contact 61g is connected to the line 2c for the temperature control signal. The remaining electrical contacts 61b-61e, on the other hand, are free of electrical connection. There is also a magnetic element 63 which, when arranged in their proximity, keeps the magnetic switches 51, 52 closed.

The first connector 22 of the recharging device 3 is equal to the first connector 20 represented in fig. 2, and has seven accessible electrical contacts 22a-22g.

Operatively, when the battery elements 5, 6, and 7 are charged, the second connector 20 is connected to the third connector 61. Such a connection causes the magnetic element 63 to approach the switches 51 and 52 and makes them close, and the electronic device is supplied between the two power supply lines 2a and 2b by the sum voltage of the three voltages of the battery elements 5, 6 and 7, thus carrying out its functions on board of the bicycle.

When the charge level of the three battery elements 5, 6 and 7 falls below a predetermined threshold, it becomes necessary to carry out the recharging operation. In this respect, the second connector 20 is disconnected from the third connector 61 and the magnetic element 63 is therefore moved away from the magnetic switches 51, 52. They go back into open position, and the power supply unit 1 with the second connector 20 can be connected to the first connector 22 through the electrical connection of the contacts 22a-22g with the corresponding contacts 20a-20g of the second connector 20. In such a configuration, the battery elements 5, 6 and 7 are disconnected from each other (or in the configuration not in series) and every single battery element is connected to a respective recharging source of the recharging device 3.

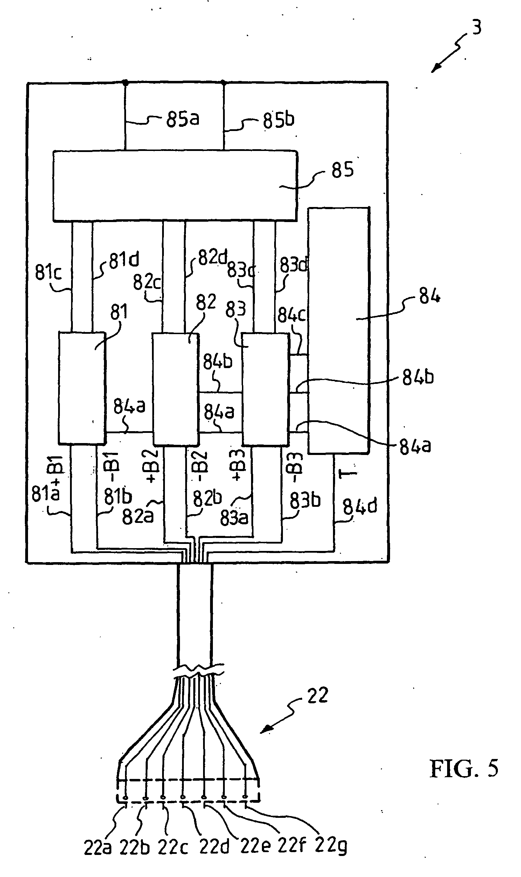

In fig. 5 a preferred embodiment of a recharging device usable for the power supply unit 1 of the invention is schematically represented.

The represented recharging device, globally indicated with 3, has a first connector 22 of the type previously described with reference to figures 2 and 4. In different solutions, however, it can be foreseen to use a different first connector, for example of the type described in figures 1 and 3, associated, in such a case, with the corresponding embodiments as far as the power supply unit 1 and the electronic device 2 are concerned.

The recharging device 3 consists of three independent recharging sources 81, 82, 83, a supervision and monitoring unit 84, and a power supply unit 85 of the recharging sources 81, 82, 83. Each recharging source 81, 82, 83 is independent of the others, and is provided with a first pair of charging terminals 81a, 81b, 82a, 82b, 83a, 83b which are electrically connected to the respective pairs of electrical contacts 22a, 22b, 22c, 22d, 22e, 22f of the first connector 22.

A second pair of power supply terminals 81c, 81d, 82c, 82d, 83c, 83d connect each source 81, 82, 83 to the power supply unit 85 which is in turn connected to the power supply mains, for example to the 220 V_{ac} monophase mains, through power supply cables 85a, 85b.

The supervision and monitoring unit 84 is electrically connected to each charging source 81, 82, 83 through respective control lines 84a, 84b, 84c. A further input line 84d connects the supervision and monitoring unit 84 to the electrical contact 22g of the first connector 22.

During the recharging step, i.e. when the first connector 22 is connected to the second connector 20 of the power supply unit 1, the three recharging sources 81, 82, 83 are directly connected in an independent way, through the pairs of charging terminals 81a, 81b, 82a, 82b, 83a, 83b, to the respective terminals 5a, 5b, 6a, 6b, 7a, 7b of the battery elements 5, 6, 7. At the same time, the temperature signal coming from the temperature detector 8 is acquired by the supervision and monitoring unit 84 through the input line 84d.

Such a configuration allows the separate recharging of each battery element 5, 6, 7 through the corresponding recharging source 81, 82, 83 under the supervision of the supervision and monitoring unit 84. Through the control lines 84a, 84b, 84c, the supervision and monitoring unit 84 acquires the recharging parameters of the battery elements through communication with the individual recharging sources 81, 82, 83. Moreover, the signal coming from the input line 84 allows a temperature control to be accomplished during recharging. This allows the simultaneous, and therefore quicker, charging of each battery element 5, 6, 7 to be managed with control and diagnosis of the recharging status. The reaching of the final charging status and/or the detection of possible failures of one of the battery elements, for example following overheating, is then indicated through suitable display means, for example through luminous LEDs.

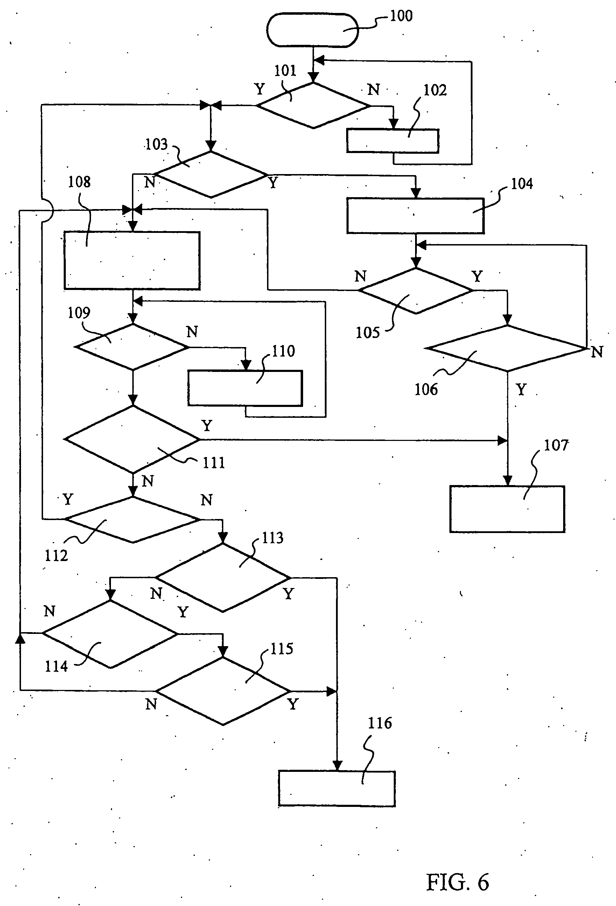

As far as the recharging operations of each recharging source 81, 82, 83 are concerned, a preferred method is described with reference to the flow diagram of fig. 6.

Block 100 indicates the start of the recharging procedure which takes place when the recharging device 3 is connected to the power supply unit 1, and thus each recharging source 81, 82, 83 carries out the recharging of a respective battery element 5, 6 and 7.

In block 101, the voltage V_{bat} of the battery element is compared with the value of the foreseen complete charge voltage V_{cc}. If the voltage V_{bat} is not less than V_{cc}, the battery element is charged and a waiting status is entered, identified by block 102. If the voltage V_{bat} is less than V_{cc}, i.e. the battery element is not totally charged, block 103 is entered, where it is checked whether the voltage V_{bat} of the battery element is below a minimum threshold voltage V_{low}. If the comparison gives a negative outcome, block 108 of start of the normal recharging step is entered. If the comparison gives a positive outcome, block 104 is instead entered, where a pre-conditioning step begins. Such a step consists of the application of a current to the battery element until the battery voltage V_{bat} reaches a predetermined value, in a pre-conditioning time T_{pc}. In the next block 105 it is checked whether the voltage V_{bat} of the battery element is less than the minimum threshold voltage V_{low}. If the comparison is positive, block 106 is entered, in which it is checked whether the pre-conditioning time T_{pc} has passed. If the pre-conditioning time T_{pc} has passed, it means that the battery element has not reached the minimum threshold voltage V_{low} during the pre-conditioning step, and therefore block 107 is entered, where it is foreseen to suspend the recharging operation and to indicate the failure of the battery element.

If the comparison in block 105 is negative, i.e. the voltage V_{bat} of the battery element is not less than the minimum threshold voltage V_{low}, then the pre-conditioning step was successful and from block 105, block 108 of start of the normal charging step is entered.

The normal charging step provides for a first charging step with constant current I_{c} and a second step with constant voltage V_{c} for a total charging time tₜₒₜ.

In block 109, the temperature Te of the battery element being charged is compared with a predetermined operating limit temperature value Tₗᵢₘ. If Tₑ is not less than Tₗᵢₘ, block 110 is entered, in which the charging is suspended and an overheating signal error is displayed.

If the operating temperature Te is less than the limit temperature Tₗᵢₘ, block 111 is entered, in which it is checked whether the recharging time has reached a predetermined recharging maximum time limit tₗᵢₘ. In the positive case, block 107 is entered, in which charging is suspended and a battery element failure error is indicated.

If the recharging time has not reached the time limit tₗᵢₘ, block 112 is entered, in which it is checked whether the voltage V_{bat} of the battery element is less than the minimum threshold voltage V_{low}. If the comparison is positive, the comparison block 103 is returned to, to once again start the recharging cycle.

If, on the other hand, the comparison is negative, block 113 is entered, in which the detected charging current I_{cr} is compared with the expected end of charging current I_{fc}. If such a comparison is positive, the final block 116 of the end of charging with indication of the end of charging is entered. If, on the other hand, the comparison is negative, the charging is not yet complete and block 114 is entered, in which it is checked whether the detected current has a predetermined value of the start of a final charging step I_{ffc}. If such a comparison is negative, block 108 is returned to, to continue the recharging cycle, if it is positive, block 115 is entered. In 115 it is checked whether a predetermined time for the final recharging step T_{fc} has passed. In the affirmative case the recharging is complete and final block 116 is entered, otherwise block 108 is returned to, to continue the recharging cycle.

The described method, as stated, is relative to a recharging cycle of a recharging source of the recharging device of fig. 5. The described method can, however, also be used in modified embodiments of the recharging device in which its is foreseen, for example, that the recharging source is just one and that the battery elements are connected, in the recharging step, in parallel. This can be obtained by providing that in the third connector there are electrical bridges which connect all of the positive terminals of the battery elements together, and all of the negative terminals of the battery elements together, the two groups then being connected to the two recharging lines of the single recharging source.

## Claims

1. An electrical system comprising an electronic device (2) of a bicycle, a rechargeable electrical power supply unit (1) therefor, and a recharging device (3), the power supply unit (1) comprising at least two battery elements (5, 6, 7) with a positive pole (5a, 6a, 7a) and a negative pole (5b, 6b, 7b), said battery elements (5, 6, 7) being arranged in such a way that through switching means (9; 31, 32; 51, 52) it is possible to realise a first operating configuration in which said battery elements (5, 6, 7) are connected in series for the delivery of energy to said electronic device (2), and a second operating configuration in which said battery elements (5, 6, 7) are connected not in series to said recharging device (3), **characterised in that** said switching means (9; 31, 32; 51, 52) are proximity switches (9; 31, 32; 51, 52) actuated when the power supply unit (1) is connected/disconnected to/from the recharging device (3) or the electronic device (2).

2. System according to claim 1, **characterised in that** in said second operating configuration said battery elements (5, 6, 7) are each individually connected to a respective recharging source (81, 82, 83) of said recharging device (3).

3. System according to claim 1, **characterised in that** in said second operating configuration said battery elements (5, 6, 7) are all connected in parallel to a single recharging source of said recharging device (3).

4. System according to claim 1, **characterised in that** said switching means (9; 31, 32; 51, 52) comprise switches included in the power supply unit (1).

5. System according to claim 4, **characterised in that** said switching means (9; 31, 32; 51, 52) comprise at least one switch (10, 11; 31, 32; 51, 52) suitable for electrically connecting the positive/negative pole (5a, 5b, 6a, 6b, 7a, 7b) of one of said battery elements (5, 6, 7) with the negative/positive pole (5b, 5a, 6b, 6a, 7b, 7a) of the battery element (5, 6, 7) which follows in said series.

6. System according to claim 5, **characterised by** comprising a second switch (12) arranged between said series of said battery elements (5, 6, 7) and said electronic device (2).

7. System according to claim 5, **characterised in that** the power supply unit (1) is connected to said electronic device (2) in a fixed manner, and **in that** said at least one switch (10, 11) is normally closed.

8. System according to claim 7, **characterised in that** said recharging device (3) comprises command means (13) for the opening of said at least one switch (10, 11).

9. System according to claim 1, **characterised in that** said recharging device (3) comprises a first connector (4; 22; 42) for the connection to said power supply unit (1).

10. System according to claims 8 and 9, **characterised in that** said command means (13) are embodied in said first connector (4) of said recharging device (3).

11. System according to claim 10, **characterised in that** said command means (13) act when said first connector (4) is connected to said power supply unit (1).

12. System according to claim 5, **characterised in that** said power supply unit (1) comprises a second connector (20) and **in that** said electronic device (2) comprises a third connector (41; 61) suitable for being connected to said second connector (20) to realise a disconnectable electrical connection.

13. System according to claim 12, **characterised in that** said at least one switch (31, 32; 51, 52) is embodied in said second connector (20).

14. System according to claim 13, **characterised in that** said at least one switch (31, 32) is of the normally-closed type.

15. System according to claim 14, **characterised in that** said battery charging device (3) comprises command means (43) for opening said at least one switch (31, 32).

16. System according to claim 15, **characterised in that** said command means (43) are embodied in said first connector (42) of said recharging device (3).

17. System according to claim 15, **characterised in that** said command means (43) act when said first connector (42) is connected to said power supply unit (1).

18. System according to claim 13, **characterised in that** said at least one switch (51, 52) is of the normally-open type.

19. System according to claim 18, **characterised in that** said electronic device (2) comprises command means (63) for closing said at least one switch (51, 52).

20. System according to claim 19, **characterised in that** said command means (63) are embodied in said third connector (61) of said electronic device (2).

21. System according to claim 20, **characterised in that** said command means (63) act when said third connector (61) is connected to said second connector (20).

22. System according to claim 1, **characterised in that** said proximity switches are of a mechanical type.

23. System according to claim 1, **characterised in that** said proximity switches are of an electromechanical type.

24. System according to claim 1, **characterised in that** said proximity switches (10, 11, 12; 31, 32; 51, 52) are of a magnetic type.

25. System according to claim 1, **characterised in that** said proximity switches (10, 11, 12; 31, 32; 51, 52) are Reed switches actuable by a magnetic element (13; 43; 63).

26. System according to claim 1, **characterised by** comprising a temperature detector (8) suitable for generating a signal for said electronic device (2) and/or said recharging device (3).

27. according to claim 1, **characterised in that** said battery elements (5, 6, 7) are of the Li-Ion or Li-Ion with polymeric electrolyte type.

28. System according to claim 2, **characterised in that** said recharging device (3) comprises at least two recharging sources (81, 82, 83) for battery elements (5, 6, 7), and a supervision and monitoring unit (84) of said recharging sources (81, 82, 83).

29. System according to claim 28, **characterised in that** said supervision and monitoring unit (84) comprises an input (84d) for the acquisition of a temperature signal.

30. System according to claim 28, **characterised in that** said recharging device (3) comprises a power supply unit (85) of said recharging sources (81, 82, 83) for the connection to a power supply mains.

31. System according to claim 28, **characterised in that** said recharging device (3) comprises display means of the charging status of each of said battery elements (5, 6, 7).

32. System according to claim 31, **characterised in that** said display means consist of LEDs.

33. Method for recharging each of said battery elements (5, 6, 7) of the system of claim 1, comprising the following steps:
- checking the residual charge status of the connected battery element (5, 6, 7);
- charging said battery element (5, 6, 7) with a constant current for a first given time;
- charging said battery element (5, 6, 7) with a constant voltage for a second given time;
- detecting the completion of the charging.

34. Method according to claim 33, **characterised by** comprising a further pre-conditioning step after the checking step of the residual charge status.

35. Method according to claim 34, **characterised in that** said pre-conditioning step provides for applying a current to the battery element (5, 6, 7) until a battery voltage (V_{low}) of predetermined value is reached.

36. Method according to claim 33, **characterised by** further providing for a control of the temperature of each battery element (5, 6, 7) and an indication of possible overheating.

## Patentansprüche

1. Elektrisches System, das eine elektronische Vorrichtung (2) eines Fahrrads, eine wiederaufladbare Stromversorgungseinheit (1) dafür und eine Ladevorrichtung (3) umfasst, wobei die Stromversorgungseinheit (1) wenigstens zwei Batterieelemente (5, 6, 7) mit einem positive Pol (5a, 6a, 7a) und einem negativen Pol (5b, 6b, 7b) umfasst, die Batterieelemente (5, 6, 7) so angeordnet sind, dass es über Schalteinrichtungen (9; 31, 32; 51, 52) möglich ist, eine erste Funktionskonflguration, in der die Batterieelemente (5, 6, 7) zur Abgabe von Energie an die elektronische Vorrichtung in Reihe verbunden sind, sowie eine zweite Funktionskonfiguration herzustellen, in der die Batterieelemente (5, 6, 7) nicht in Reihe mit der Ladevorrichtung (3) verbunden sind, **dadurch gekennzeichnet, dass** die Schalteinrichtungen Näherungsschalter (9; 31, 32; 51, 52) sind, die betätigt werden, wenn die Stromversorgungseinheit (1) mit/von der Ladevorrichtung (3) oder der elektronischen Vorrichtung (2) verbunden/getrennt wird.

2. System nach Anspruch 1, **dadurch gekennzeichnet, dass** in der zweiten Funktionskonfiguration die Batterieelemente (5, 6, 7) jeweils einzeln mit einer entsprechenden Ladequelle (81, 82, 83) der Ladevorrichtung (3) verbunden sind.

3. System nach Anspruch 1, **dadurch gekennzeichnet, dass** in der zweiten Funktionskonfiguration die Batterieelemente (5, 6, 7) sämtlich parallel mit einer einzelnen Ladequelle der Ladevorrichtung (3) verbunden sind.

4. System nach Anspruch 1, **dadurch gekennzeichnet, dass** die Schalteinrichtungen (9; 31, 32; 51, 52) Schalter umfassen, die in der Stromversorgungseinheit (1) enthalten sind.

5. System nach Anspruch 4, **dadurch gekennzeichnet, dass** die Schalteinrichtungen (9; 31, 32; 51, 52) wenigstens einen Schalter (10, 11; 31, 32; 51, 52) umfassen, der zum elektrischen Verbinden des positiven/negativen Pols (5a, 5b, 6a, 6b, 7a, 7b) eines der Batterieelemente (5, 6, 7) mit dem negativen/positiven Pol (5b, 5a, 6b, 6a, 7b, 7a) des in der Reihe folgenden Batterieelementes (5, 6, 7) geeignet ist.

6. System nach Anspruch 5, **dadurch gekennzeichnet, dass** es einen zweiten Schalter (12) umfasst, der zwischen der Reihe der Batterieelemente (5, 6, 7) und der elektronischen Vorrichtung (2) angeordnet ist.

7. System nach Anspruch 5, **dadurch gekennzeichnet, dass** die Stromversorgungseinheit (1) fest mit der elektronischen Vorrichtung (2) verbunden ist und dass der wenigstens eine Schalter (10, 11) im Ruhezustand geschlossen ist.

8. System nach Anspruch 7, **dadurch gekennzeichnet, dass** die Ladevorrichtung (3) eine Befehlseinrichtung (13) zum Öffnen des wenigstens einen Schalters (10, 11) umfasst.

9. System nach Anspruch 1, **dadurch gekennzeichnet, dass** die Ladevorrichtung (3) einen ersten Verbinder (4; 22; 42) zur Verbindung mit der Stromversorgungseinheit (1) umfasst.

10. System nach den Ansprüchen 8 und 9, **dadurch gekennzeichnet, dass** die Befehlseinrichtung (13) in dem ersten Verbinder (4) der Ladeeinrichtung (3) ausgeführt ist.

11. System nach Anspruch 10, **dadurch gekennzeichnet, dass** die Befehlseinrichtung (13) arbeitet, wenn der erste Verbinder (4) mit der Stromversorgungseinheit (1) verbunden ist.

12. System nach Anspruch 5, **dadurch gekennzeichnet, dass** die Stromversorgungseinheit (1) einen zweiten Verbinder (20) umfasst und dass die elektronische Vorrichtung (2) einen dritten Verbinder (41; 61) umfasst, der zum Verbinden mit dem zweiten Verbinder (20) geeignet ist, um eine untrennbare elektrische Verbindung herzustellen.

13. System nach Anspruch 12, **dadurch gekennzeichnet, dass** der wenigstens eine Schalter (31, 32; 51, 52) in dem zweiten Verbinder (20) ausgeführt ist.

14. System nach Anspruch 13, **dadurch gekennzeichnet, dass** der wenigstens eine Schalter (31, 32) vom im Ruhezustand geschlossenen Typ ist.

15. System nach Anspruch 14, **dadurch gekennzeichnet, dass** die Batterieladevorrichtung (3) eine Befehlseinrichtung (43) zum Öffnen des wenigstens einen Schalters (31, 32) umfasst.

16. System nach Anspruch 15, **dadurch gekennzeichnet, dass** die Befehlseinrichtung (43) in dem ersten Verbinder (42) der Ladevorrichtung (3) ausgeführt ist.

17. System nach Anspruch 15, **dadurch gekennzeichnet, dass** die Befehlseinrichtung (43) arbeitet, wenn der erste Verbinder (42) mit der Stromversorgungseinheit (1) verbunden ist.

18. System nach Anspruch 13, **dadurch gekennzeichnet, dass** der wenigstens eine Schalter (51, 52) vom im Ruhezustand offenen Typ ist.

19. System nach Anspruch 18, **dadurch gekennzeichnet, dass** die elektronische Vorrichtung (2) eine Befehlseinrichtung (63) zum Schießen des wenigstens einen Schalters (51, 52) umfasst.

20. System nach Anspruch 19, **dadurch gekennzeichnet, dass** die Befehlseinrichtung (63) in dem dritten Verbinder (61) der elektronischen Vorrichtung (2) ausgeführt ist.

21. System nach Anspruch 20, **dadurch gekennzeichnet, dass** die Befehlseinrichtung (63) arbeitet, wenn der dritte Verbinder (61) mit dem zweiten Verbinder (20) verbunden ist.

22. System nach Anspruch 1, **dadurch gekennzeichnet, dass** die Näherungsschalter von einem mechanischen Typ sind.

23. System nach Anspruch 1, **dadurch gekennzeichnet, dass** die Näherungsschalter von einem elektromechanischen Typ sind.

24. System nach Anspruch 1, **dadurch gekennzeichnet, dass** die Näherungsschalter (10, 11, 12; 31, 32; 51, 52) von einem magnetischen Typ sind.

25. System nach Anspruch 1, **dadurch gekennzeichnet, dass** die Näherungsschalter Reed-Schalter sind, die durch ein Magnetelement (13; 43; 63) betätigt werden können.

26. System nach Anspruch 1, **dadurch gekennzeichnet, dass** es einen Temperaturdetektor (8) umfasst, der zum Erzeugen eines Signals für die elektronische Vorrichtung (2) und/oder die Ladevorrichtung (3) geeignet ist.

27. System nach Anspruch 1, **dadurch gekennzeichnet, dass** die Batterieelemente (5, 6, 7) von Li-Ionen oder Li-Ionen-Typ mit Polymer-Elektrolyt sind.

28. System nach Anspruch 2, **dadurch gekennzeichnet, dass** die Ladevorrichtung (3) wenigstens zwei Ladequellen (81, 82, 83) für Batterieelemente (5, 6, 7) sowie eine Kontroll- und-Überwachungs-Einheit (84) der Ladequellen (81, 82, 83) umfasst.

29. System nach Anspruch 28, **dadurch gekennzeichnet, dass** die Kontroll-und- Überwachungs-Einheit (84) einen Eingang (84d) für die Erfassung eines Temperatursignals umfasst.

30. System nach Anspruch 28, **dadurch gekennzeichnet, dass** die Ladevorrichtung (3) eine Stromversorgungseinheit (85) der Ladequellen (81, 82, 83) zur Verbindung mit einem Stromversorgungsnetz umfasst.

31. System nach Anspruch 28, **dadurch gekennzeichnet, dass** die Ladevorrichtung (3) eine Anzeigeeinrichtung für den Ladestatus jedes der Batterieelemente (5, 6, 7) umfasst.

32. System nach Anspruch 31, **dadurch gekennzeichnet, dass** die Anzeigeeinrichtung aus LED besteht.

33. Verfahren zum Laden jedes der Batterieelemente (5, 6, 7) des Systems nach Anspruch 1, das die folgenden Schritte umfasst:
- Prüfen des Restladungsstatus des verbundenen Batterieelementes (5, 6, 7);
- Laden des Batterieelementes (5, 6, 7) mit einem konstanten Strom über eine erste vorgegebene Zeit;
- Laden des Batterieelementes (5, 6, 7) mit einer konstanten Spannung über eine zweite vorgegebene Zeit;
- Erfassen des Abschlusses des Ladens.

34. Verfahren nach Anspruch 33, **dadurch gekennzeichnet, dass** es des Weiteren einen Vorbehandlungsschritt nach dem Schritt des Prüfens des Restladungsstatus umfasst.

35. Verfahren nach Anspruch 34, **dadurch gekennzeichnet, dass** der Vorbehandlungsschritt vorsieht, dass ein Strom an das Batterieelement (5, 6, 7) angelegt wird, bis eine Batteriespannung (V_{low}) eines vorgegebenen Wertes erreicht ist.

36. Verfahren nach Anspruch 33, **dadurch gekennzeichnet, dass** es des Weiteren eine Steuerung der Temperatur jedes Batterieelementes (5, 6, 7) sowie eine Anzeige möglicher Überhitzung vorsieht.

## Revendications

1. Système électrique comprenant un dispositif électronique (2) d'une bicyclette, une unité d'alimentation électrique rechargeable (1) pour cela, et un dispositif de recharge (3), l'unité d'alimentation électrique (1) comprenant au moins deux éléments de batterie (5, 6, 7) ayant un pôle positif (5a, 6a, 7a) et un pôle négatif (5b, 6b, 7b), lesdits éléments de batterie (5, 6, 7) étant agencés de telle manière que par l'intermédiaire de moyens de commutation (9 ; 31, 32 ; 51, 52), il est possible de réaliser une première configuration de mise en oeuvre dans laquelle lesdits éléments de batterie (5, 6, 7) sont connectés en série pour la délivrance de l'énergie audit dispositif électronique (2), et une deuxième configuration de mise en oeuvre dans laquelle lesdits éléments de batterie (5, 6, 7) ne sont pas connectés en série audit dispositif de recharge (3), **caractérisé en ce que** lesdits moyens de commutation (9 ; 31, 32 ; 51, 52) sont des commutateurs de proximité (9 ; 31, 32 ; 51, 52) activés lorsque l'unité d'alimentation (1) est connectée/déconnectée au/du dispositif de recharge (3) ou au/du dispositif électronique (2).

2. Système selon la revendication 1, **caractérisé en ce que** dans ladite deuxième configuration de mise en oeuvre, lesdits éléments de batterie (5, 6, 7) sont chacun connectés individuellement à une source de recharge respective (81, 82, 83) dudit dispositif de recharge (3).

3. Système selon la revendication 1, **caractérisé en ce que** dans ladite deuxième configuration de mise en oeuvre, lesdits éléments de batterie (5, 6, 7) sont tous connectés en parallèle à une source de recharge unique dudit dispositif de recharge (3).

4. Système selon la revendication 1, **caractérisé en ce que** lesdits moyens de commutation (9 ; 31, 32 ; 51, 52) comprennent des commutateurs inclus dans l'unité d'alimentation (1).

5. Système selon la revendication 4, **caractérisé en ce que** lesdits moyens de commutation (9 ; 31, 32 ; 51, 52) comprennent au moins un commutateur (10, 11 ; 31, 32 ; 51, 52) approprié pour connecter électriquement le pôle positif/négatif (5a, 5b, 6a, 6b, 7a, 7b) d'un élément parmi lesdits éléments de batterie (5, 6, 7) au pôle négatif/positif (5b, 5a, 6b, 6a, 7b, 7a) de l'élément de batterie (5, 6, 7) qui suit dans ledit circuit série.

6. Système selon la revendication 5, **caractérisé par le fait qu'**il comprend un deuxième commutateur (12) agencé entre ledit circuit série desdits éléments de batterie (5, 6, 7) et ledit dispositif électronique (2).

7. Système selon la revendication 5, **caractérisé en ce que** l'unité d'alimentation (1) est connectée audit dispositif électrique (2) d'une manière fixe, et **en ce que** ledit au moins un commutateur (10, 11) est normalement fermé.

8. Système selon la revendication 7, **caractérisé en ce que** ledit dispositif de recharge (3) comprend un moyen de commande (13) destiné à ouvrir ledit au moins un commutateur (10, 11).

9. Système selon la revendication 1, **caractérisé en ce que** ledit dispositif de recharge (3) comprend un premier connecteur (4 ; 22 ; 42) destiné à une connexion à ladite unité d'alimentation (1).

10. Système selon les revendications 8 et 9, **caractérisé en ce que** ledit moyen de commande (13) est intégré dans ledit premier connecteur (4) dudit dispositif de recharge (3).

11. Système selon la revendication 10, **caractérisé en ce que** ledit moyen de commande (13) agit lorsque ledit premier connecteur (4) est connecté à ladite unité d'alimentation (1).

12. Système selon la revendication 5, **caractérisé en ce que** ladite unité d'alimentation (1) comprend un deuxième connecteur (20) et **en ce que** ledit dispositif électronique (2) comprend un troisième connecteur (41 ; 61) approprié pour être connecté audit deuxième connecteur (20) afin de réaliser une connexion électrique déconnectable.

13. Système selon la revendication 12, **caractérisé en ce que** ledit au moins un commutateur (31, 32 ; 51, 52) est intégré dans ledit deuxième connecteur (20).

14. Système selon la revendication 13, **caractérisé en ce que** ledit au moins un commutateur (31, 32) est du type normalement fermé.

15. Système selon la revendication 14, **caractérisé en ce que** ledit dispositif de charge de batterie (3) comprend un moyen de commande (43) destiné à ouvrir ledit au moins un commutateur (31, 32).

16. Système selon la revendication 15, **caractérisé en ce que** ledit moyen de commande (43) est intégré dans ledit premier connecteur (42) dudit dispositif de recharge (3).

17. Système selon la revendication 15, **caractérisé en ce que** ledit moyen de commande (43) agit lorsque le premier connecteur (42) est connecté à ladite unité d'alimentation (1).

18. Système selon la revendication 13, **caractérisé en ce que** ledit au moins un commutateur (51, 52) est du type normalement ouvert.

19. Système selon la revendication 18, **caractérisé en ce que** ledit dispositif électronique (2) comprend un moyen de commande (63) destiné à fermer ledit au moins un commutateur (51, 52).

20. Système selon la revendication 19, **caractérisé en ce que** ledit moyen de commande (63) est intégré dans ledit troisième connecteur (61) dudit dispositif électronique (2).

21. Système selon la revendication 20, **caractérisé en ce que** ledit moyen de commande (63) agit lorsque ledit troisième connecteur (61) est connecté audit deuxième connecteur (20).

22. Système selon la revendication 1, **caractérisé en ce que** lesdits commutateurs de proximité sont d'un type mécanique.

23. Système selon la revendication 1, **caractérisé en ce que** lesdits commutateurs de proximité sont d'un type électromécanique.

24. Système selon la revendication 1, **caractérisé en ce que** lesdits commutateurs de proximité (10, 11, 12 ; 31, 32 ; 51, 52) sont d'un type magnétique.

25. Système selon la revendication 1, **caractérisé en ce que** lesdits commutateurs de proximité (10, 11, 12 ; 31, 32 ; 51, 52) sont des commutateurs à tiges pouvant être activés par un élément magnétique (13 ; 43 ; 63).

26. Système selon la revendication 1, **caractérisé par le fait qu'**il comprend un détecteur de température (8) approprié pour générer un signal pour ledit dispositif électronique (2) et/ou ledit dispositif de recharge (3).

27. Système selon la revendication 1, **caractérisé en ce que** lesdits éléments de batterie (5, 6, 7) sont des éléments de batterie Li-ion ou des éléments de batterie Li-ion dotés d'un type d'électrolyte polymère.

28. Système selon la revendication 2, **caractérisé en ce que** ledit dispositif de recharge (3) comprend au moins deux sources de recharge (81, 82, 83) destinées aux éléments de batterie (5, 6, 7), et une unité de supervision et de surveillance (84) desdites sources de recharge (81, 82, 83).

29. Système selon la revendication 28, **caractérisé en ce que** ladite unité de supervision et de surveillance (84) comprend une entrée (84d) destinée à l'acquisition d'un signal de température.

30. Système selon la revendication 28, **caractérisé en ce que** ledit dispositif de recharge (3) comprend une unité d'alimentation (85) desdites sources de recharge (81, 82, 83) pour la connexion à une source d'alimentation principale.

31. Système selon la revendication 28, **caractérisé en ce que** ledit dispositif de recharge (3) comprend un moyen d'affichage de l'état de charge de chaque élément parmi lesdits éléments de batterie (5, 6, 7).

32. Système selon la revendication 31, **caractérisé en ce que** ledit moyen d'affichage est constitué de diodes électroluminescentes (LED).

33. Procédé destiné à recharger chaque élément parmi lesdits éléments de batterie (5, 6, 7) du système selon la revendication 1, comprenant les étapes suivantes consistant à:
- vérifier l'état de charge résiduelle de l'élément de batterie connecté (5, 6, 7) ;
- charger ledit élément de batterie (5, 6, 7) avec un courant constant pendant une première durée donnée ;
- charger ledit élément de batterie (5, 6, 7) avec une tension constante pendant une deuxième durée donnée ;
- détecter l'achèvement de la charge.

34. Procédé selon la revendication 33, **caractérisé par le fait qu'**il comprend une étape complémentaire de pré-conditionnement après l'étape consistant à vérifier l'état de charge résiduelle.

35. Procédé selon la revendication 34, **caractérisé en ce que** ladite étape de pré-conditionnement permet l'application d'un courant à l'élément de batterie (5, 6, 7) jusqu'à ce qu'une tension de batterie (V_{low}) de valeur prédéterminée soit atteinte.

36. Procédé selon la revendication 33, **caractérisé par le fait qu'**il permet en outre un contrôle de la température de chaque élément de batterie (5, 6, 7) et une indication d'une surchauffe possible.
